# EUROPÄISCHE PATENTANMELDUNG

(11) **EP 3 061 365 A1**
(43) Veröffentlichungstag der Anmeldung: **31.08.2016**
(21) Anmeldenummer: 16157077.5
(22) Anmeldetag: 24.02.2016
(51) Int. Cl.: A47B 88/04

(54) **VORRICHTUNG ZUR LÖSBAREN VERBINDUNG EINES IN EINEM MÖBELKORPUS ÜBER EINE FÜHRUNGSEINHEIT BEWEGLICH GEFÜHRTEN MÖBELAUSZUGS MIT DER FÜHRUNGSEINHEIT**

(30) Priorität: 25.02.2015 DE 202015001489 U
(71) Anmelder: Grass GmbH, 6973 Höchst (AT)
(72) Erfinder: Mohr, Emanuel, 6870 Bezau (AT); Mittwoch, Stephan, 6850 Dornbirn (AT); Karu, Felix, 6844 Altach (AT)
(74) Vertreter: Patentanwälte Magenbauer & Kollegen Partnerschaft mbB

(57) **Zusammenfassung**

Bei einer Vorrichtung zur lösbaren Verbindung eines in einem Möbelkorpus über eine Führungseinheit (12) beweglich geführten Möbelauszugs (13) mit der Führungseinheit (12), mit wenigstens einem mit einer Laufschiene (14) der Führungseinheit (12) lösbar verbindbaren Adapterelement (16) und mit Befestigungsmitteln zur Fixierung des Adapterelements (16) an einer Komponente des Möbelauszugs (13), umfassen die Befestigungsmittel Rastmittel (36) zur lösbaren Befestigung des Adapterelements (16) an einer zugeordneten Komponente des Möbelauszugs (13).

## Beschreibung

Die Erfindung betrifft eine Vorrichtung zur lösbaren Verbindung eines in einem Möbelkorpus über eine Führungseinheit beweglich geführten Möbelauszugs mit der Führungseinheit, mit wenigstens einem mit einer Laufschiene der Führungseinheit lösbar verbindbaren Adapterelement und mit Befestigungsmitteln zur Fixierung des Adapterelements an einer Komponente des Möbelauszugs.

Derartige Vorrichtungen zur lösbaren Verbindung eines in einem Möbelkorpus über eine Führungseinheit beweglich geführten Möbelauszugs mit der Führungseinheit sind beispielsweise aus der DE 20 2009 017 319 U1 bekannt. Dort ist ein Möbelauszug in Form einer Schublade beschrieben, die über eine Rastkupplung mit einer Schubladenschiene verbunden ist. Die Rastkupplung weist zur Verbindung mit dem Schubladenboden der Schublade einen Befestigungsabschnitt auf, der zwei Montagebohrungen aufweist, über die mithilfe von Montageschrauben eine Befestigung am Schubladenboden erfolgt. Die Befestigung der Rastkupplung an der Schubladenschiene erfolgt durch eine lösbare Rastverbindung.

Aufgabe der Erfindung ist es, eine Vorrichtung der eingangs erwähnten Art zu schaffen, bei der sich Möbelauszug und Führungseinheit in einfacher und schneller Weise miteinander verbinden lassen, wobei insbesondere die Demontage von Möbelauszug und Führungseinheit ebenfalls in einfacher und schneller Weise durchführbar ist.

Diese Aufgabe wird durch eine Vorrichtung mit den Merkmalen des unabhängigen Anspruchs 1 gelöst. Weiterbildungen der Erfindung sind in den Unteransprüchen dargestellt.

Die erfindungsgemäße Vorrichtung zeichnet sich dadurch aus, dass die Befestigungsmittel Rastmittel zur lösbaren Befestigung des Adapterelements an der zugeordneten Komponente des Möbelauszugs umfassen.

Im Gegensatz zum vorerwähnten Stand der Technik, bei dem es zur Befestigung des Möbelauszugs an der Führungsschiene der Führungseinheit mindestens zweier Schraubverbindungen bedarf, werden bei der Erfindung nunmehr Rastmittel eingesetzt, wodurch wenigstens eine Schraubverbindung gegenüber dem Stand der Technik eingespart werden kann. Da eine Führungseinrichtung in der Regel wenigstens zwei einander entgegengesetzt angeordneten Seitenrändern des Möbelauszugs zugeordnete Führungsschienen aufweist, die jeweils über ein separates Adapterelement mit dem Möbelauszug zu verbinden sind, werden also bei dieser Ausgestaltung wenigstens zwei Schraubverbindungen eingespart.

In besonders bevorzugter Weise sind die Befestigungsmittel zur schraubenlosen Befestigung des Adapterelements eingerichtet. Zweckmäßigerweise bestehen die Befestigungsmittel in diesem Fall also lediglich aus Rastmitteln, die eine schraubenlose Befestigung des Adapterelements am Möbelauszug erlauben. Alternativ wäre es denkbar, dass das Adapterelement mittels Rastmitteln und einer einzigen Schraubverbindung am Möbelauszug befestigt wird, womit, wie bereits erwähnt, gegenüber dem Stand der Technik eine Schraubverbindung eingespart werden kann.

Bei einer Weiterbildung der Erfindung sind von den Rastmitteln Bestandteile an dem Adapterelement und andere Bestandteile am Möbelauszug angeordnet.

Bei einer Weiterbildung der Erfindung weisen die Rastmittel Rastaufnahmen und in die Rastaufnahmen beim Verrasten einrastbare Rastglieder auf.

In besonders bevorzugter Weise weist das Adapterelement einen mit Bestandteilen der Rastmittel ausgestatten Rastabschnitt auf, der bei der Befestigung derart in Kontakt mit einem anderen Bestandteilen der Rastmittel ausgestatteten Gegen-Rastabschnitt am Möbelauszug bringbar ist, dass eine Rastverbindung herstellbar ist.

In besonders bevorzugter Weise weist der Rastabschnitt ein U-förmiges Befestigungsprofil zum Umklammern des Gegen-Rastabschnitts auf.

Ds Befestigungsprofil kann eine Aufnahmenut zur Aufnahme des Gegen-Rastabschnitts aufweisen. Zweckmäßigerweise handelt es sich bei dem Gegen-Rastabschnitt um einen flächenförmigen Abschnitt einer Komponente des Möbelauszugs, der in der Montagestellung des Adapterelements in die Aufnahmenut eintaucht.

In besonders bevorzugter Weise besitzt das Befestigungsprofil wenigstens ein Rastglied in Form einer elastisch nachgiebigen mit dem Gegen-Rastabschnitt verrastbaren Rastnase.

Das Befestigungsprofil kann einen Rastvorsprung aufweisen, dem eine Rastaufnahme am Gegen-Rastabschnitt derart zugeordnet ist, dass eine Tiefenverrastung des Adapterelements an der Seitenwand herstellbar ist.

Bei einer Weiterbildung der Erfindung umfasst die Vorrichtung wenigstens einen Möbelauszug, insbesondere Schublade.

Zweckmäßigerweise weist der Möbelauszugs Seitenwände und einen Boden auf, wobei der Gegen-Rastabschnitt an wenigstens einer Seitenwand, insbesondere Seitenwandelement und/oder am Boden angeordnet ist.

Besonders bevorzugt weist der Gegen-Rastabschnitt eine Rastaufnahme in Form einer in der Seitenwand ausgebildeten Aussparung auf.

Bei einer Weiterbildung der Erfindung sind die Seitenwände als Seitenzargen ausgebildet.

Es ist möglich, dass der Gegen-Rastabschnitt an einem von der Seitenwand und dem Boden separaten Rastbauteil ausgebildet ist, das seinerseits an der zugeordneten Seitenwand oder am Boden montierbar oder montiert ist.

Die Erfindung umfasst ferner ein Möbel, mit einem relativ zu einem Möbelkorpus bewegbaren, über eine Führungseinheit geführten Möbelauszug, das sich durch eine Vorrichtung nach einem der Ansprüche 1 bis 13 auszeichnet.

Bevorzugte Ausführungsbeispiele der Erfindung sind in der Zeichnung dargestellt und werden im Folgenden näher erläutert. In der Zeichnung zeigen:
- Figur 1: eine perspektivische Darstellung eines ersten Ausführungsbeispiels der erfindungsgemäßen Vorrichtung, wobei das Adapterelement der Vorrichtung an einem Seitenwandelement des Möbelauszugs befestigt ist,
- Figur 2: eine perspektive Darstellung der Vorrichtung von Figur 1, wobei das Adapterelement an der Seitenwand des Möbelauszugs befestigt ist, jedoch der Boden des Möbelauszugs fehlt,
- Figur 3: eine perspektivische Darstellung der Vorrichtung aus Figur 1, wobei zusätzlich zur Befestigung des Adapterelements an der Seitenwand noch eine Führungsschiene des Möbelauszugs am Adapterelement befestigt ist,
- Figur 4: eine perspektivische Darstellung der Vorrichtung aus Figur 3 mit Boden,
- Figur 5: eine perspektivische Darstellung auf das Adapterelement von schräg oben gemäß einem zweiten Ausführungsbeispiel der Vorrichtung,
- Figur 6: eine perspektive Darstellung auf das Adapterelement von Figur 5 in Richtung des Pfeiles V aus Figur 5,
- Figur 7: eine Vorderansicht auf die Vorrichtung aus Figur 5 mit an der Seitenwand befestigtem Adapterelement,
- Figur 8: eine perspektive Darstellung auf die Vorrichtung von Figur 7 in Richtung des Pfeiles VII aus Figur 7,
- Figur 9: eine vergrößerte Darstellung der Einzelheit X aus den Figuren 5 und 6,
- Figur 10: eine perspektivische Darstellung des Rastabschnitts des Adapterelements aus Figur 9,
- Figur 11: eine Seitenansicht auf ein eine erste Variante eines Seitenwandelement mit dem Gegen-Rastabschnitt,
- Figur 12: eine Seitenansicht auf eine zweite Variante eines Seitenwandelement mit dem Gegen-Rastabschnitt und
- Figur 13: das Adapterelement mit daran befestigter Führungsschiene.

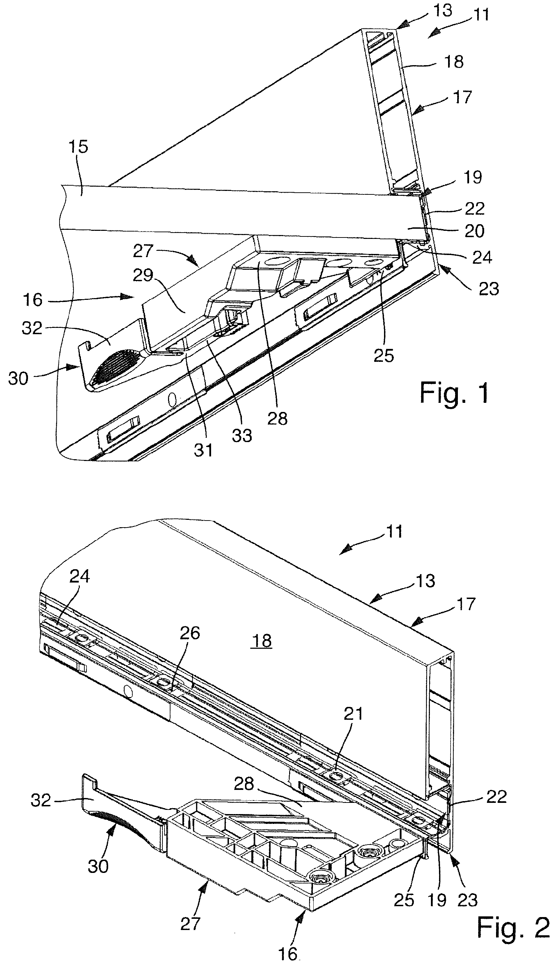

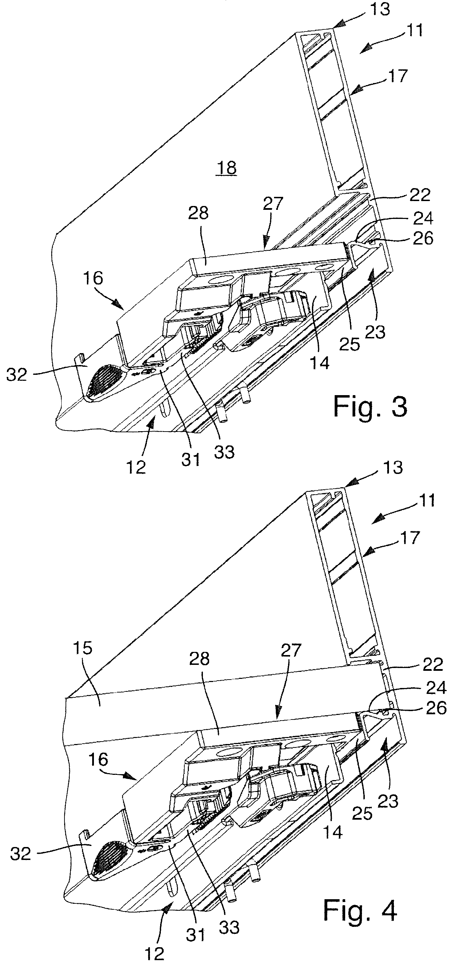

Die Figuren 1 bis 4 zeigen ein erstes Ausführungsbeispiel der erfindungsgemäßen Vorrichtung 11 eines in einem Möbelkorpus (nicht dargestellt) über eine Führungseinrichtung 12 beweglich geführten Möbelauszugs 13 mit der Führungseinheit 12. Die Erfindung wird im Folgenden beispielhaft anhand eines als Schublade ausgebildeten Möbelauszugs 13 gezeigt und beschrieben. Es ist selbstverständlich möglich, die Vorrichtung 11 auch an anderen bewegbaren Möbelteilen, beispielsweise an von Schubladen verschiedenen Möbelauszügen einzusetzen.

Die Schublade ist mittels einer Führungseinrichtung relativ zu einem Möbelkorpus verschieblich gelagert. Die Führungseinrichtung umfasst mehrere Führungseinheiten 12, die einander entgegengesetzt liegenden Seitenränder der Schublade angeordnet sind. Von den Führungseinheiten 12 ist beispielhaft lediglich eine dargestellt.

Die Führungseinheit 12 besitzt eine Korpusschiene (nicht dargestellt), die beispielsweise als umgebogenes Blechbauteil ausgestaltet sein kann. Die Korpusschiene ist über geeignete Befestigungsmittel an einer zugeordneten Seitenwand einer im Möbelkorpus ausgebildeten Schubladenaufnahme positionsfest befestigt. An der Korpusschiene kann eine Mittelschiene verschieblich gelagert sein, an der wiederum eine Laufschiene, die im gezeigten Beispielsfall auch als Schubladenschiene zu bezeichnen ist, mittels Lagermitteln verschieblich geführt ist. Die Laufschiene ist der Schublade zugeordnet und verläuft unterhalb des Schubladen-Bodens 15 in Tiefenrichtung. Die Kombination aus Korupsschiene, Mittelschiene und Laufschiene 14 wird Vollauszug genannt. Es ist jedoch auch denkbar, Führungseinheiten 12 ohne Mittelschiene zu verwenden.

Es besteht der Bedarf, die Laufschiene 14 mit dem Möbelauszug 13, also der Schublade zu koppeln, wodurch die Schublade beim Ein- und Ausfahren der Laufschiene 14 mit der Laufschiene 14 mitbewegt wird. Die Vorrichtung 11 umfasst daher ein mit der Laufschiene 14 lösbar verbindbares Adapterelement 16 und Befestigungsmittel zur Fixierung des Adapterelements 16 an einer Komponente des Möbelauszugs 13.

Als Komponente des Möbelauszugs 13 ist in den Figuren 1 bis 4 beispielhaft ein Seitenwandelement 17 einer Schublade dargestellt. Das Seitenwandelement 17 kann als Aluminium-Strangpressprofilteil ausgebildet sein. Alternativ wäre es jedoch auch möglich, das Seitenwandelement 17 aus Stahlmaterial, insbesondere mehrteilig aus einem Stück eines zugeschnittenen flachen bzw. ebenen Blechmaterials, beispielsweise durch Umbiege- und Stanzprozesse zu fertigen.

Das Seitenwandelement 17 besitzt einen hohlprofilartigen Basisabschnitt 18, der sich als Schubladenseitenwand oberhalb des Schubladen-Bodens 15 erstreckt. In die Hohlkammer des Basisabschnitts 18 kann ein Frontbefestiger (nicht dargestellt) zur Befestigung einer Front, beispielsweise Frontblende, aufgenommen sein. Unterhalb des Basisabschnitts 18 des Seitenwandelements 17 schließt sich entweder einstückig mit diesem ausgebildet oder als separates Bauteil ein Bodenaufnahme-Abschnitt 19 an. Der Bodenaufnahme-Abschnitt 19 ist als Aufnahmenut ausgebildet und verläuft entlang des Seitenwandelements 17 in Tiefenrichtung. In den Bodenaufnahme-Abschnitt 19 ist ein Randabschnitt 20 des Schubladen-Bodens 15 der Schublade einsetzbar.

Der Bodenaufnahme-Abschnitt 19 besitzt ferner Boden-Befestigungsmittel 21, mit denen sich ein in den Bodenaufnahme-Abschnitt 19 eingeführter Randabschnitt 20 des Schubladen-Bodens 15 an dem Seitenwandelement 17 befestigen lässt, insbesondere falls der Schubladen-Boden 15 aus Holz besteht. Der nutförmig ausgestaltete Bodenaufnahme-Abschnitt 19 ist oberseitig durch die Unterseite des Basisabschnitts 18 und seitlich durch einen an den Basisabschnitt 18 angesetzten, hiervon im Wesentlichen rechtwinklig abstehenden Anlagesteg 22 sowie unterseitig von einem wiederum im Wesentlichen rechtwinkling von dem Anlagesteg 22 abstehenden Montageabschnitt 23 begrenzt. Der Montageabschnitt 23 lässt sich in einen Befestigungsschenkel 24, der mit dem Anlagesteg 22 verbunden ist, und einen Randsteg 25 unterteilen. Der Randsteg 25 verläuft im Wesentlichen parallel zum Anlagesteg 22. Am Befestigungsschenkel 24 befinden sich in Längsrichtung des Montageabschnitts 23 hintereinander angeordnet mehrere Krallelemente 26, die in das Material des Schubladen-Bodens 15 eindringen können und damit für eine lagesichere Aufnahme des Schubladen-Bodens 15 im Bodenaufnahme-Abschnitt 19 des Seitenwandelements 17 sorgen.

Das Adapterelement 16 der Vorrichtung 11 besitzt ein Adaptergehäuse 27, das aus Kunststoff besteht und zweckmäßigerweise mittels Kunststoffspritzgießen hergestellt ist. Das Adaptergehäuse 27 besitzt eine Grundplatte 28, wobei die Stirnseite der Grundplatte 28 gegenüber dem Rest der Grundplatte 28 verbreitert ist. Über der Grundplatte 28 des Adaptergehäuses 27 erhebt sich ein Lagerabschnitt 29 länglicher Gestalt.

Ein weiterer Bestandteil des Adapterelements 16 ist ein hebelartiges Stellelement 30, das über wenigstens ein Festkörpergelenk 31 an den Lagerabschnitt 29 des Adaptergehäuses 27 angeformt ist. Das Stellelement 30 besteht ebenfalls aus Kunststoff und wurde bei der Herstellung gleich an das Adaptergehäuse 27 mitangespritzt. Zweckmäßigerweise besteht das Stellelement 30 aus demselben Kunststoffmaterial, wodurch die Herstellungskosten, da es durch ein Komponentenmindestspritzgießen hergestellt werden kann, niedrig sind.

Das Stellelement 30 ist über das Festkörpergelenk 31 schwenkbeweglich an dem Lagerabschnitt 29 gelagert. Das Stellelement 30 besitzt einen manuell betätigbaren Betätigungsabschnitt 32, der handgriffartig ausgestaltet ist. Der Betätigungsabschnitt 32 liegt auf der einen Seite des Festkörpergelenks 31, wobei auf der anderen Seite ein Eingriffsabschnitt 33 vorgesehen ist, der zum Eingriff in komplementäre Eingriffsmittel an der Laufschiene 14 vorgesehen ist.

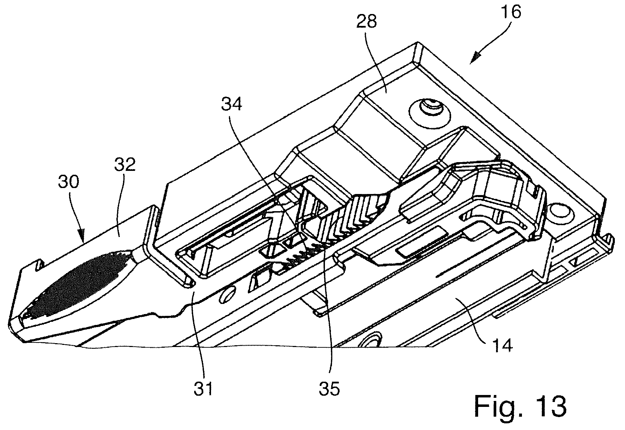

Wie insbesondere in Figur 13 zu erkennen, ist der Eingriffsabschnitt 33 auf der anderen Seite des Festkörpergelenks 31 mit Rastzähnen 34 versehen. Die Rastzähne 34 am Eingriffsabschnitt 33 sind in der in Figur 16 dargestellten Stellung des Stellelements 30 mit komplementären Laufschienen-Rastzähnen 35 an der Laufschiene 14 verrastet, wodurch das Adapterelement 16 mit der Laufschiene 14 gekoppelt ist. Durch von Fingern des Benutzers ausgeübten Druck auf die Betätigungsfläche am Betätigungsabschnitt 32 lässt sich das Stellelement 30 in Gegen-Uhrzeigerrichtung um das Festkörpergelenk 31 verschwenken, wobei die Rastzähne 34 aus den Laufschienen-Rastzähnen 35 ausrasten.

Die Vorrichtung 11 umfasst ferner Befestigungsmittel zur Fixierung des Adapterelements 16 an einer Komponente des Möbelauszugs 13, also im gezeigten beschriebenen Beispielsfall an dem Seitenwandelement 17.

Im Gegensatz zum Stand der Technik erfolgt die Verbindung des Adapterelements 16 mit dem Seitenwandelement 17 im gezeigten Beispielsfall rein schraubenlos, wobei hierzu Rastmittel 36 eingesetzt werden.

Die Rastmittel 36 umfassen am Adapterelement 16 angeordnete Bestandteile und andere Bestandteile, die am Seitenwandelement 17 ausgebildet sind.

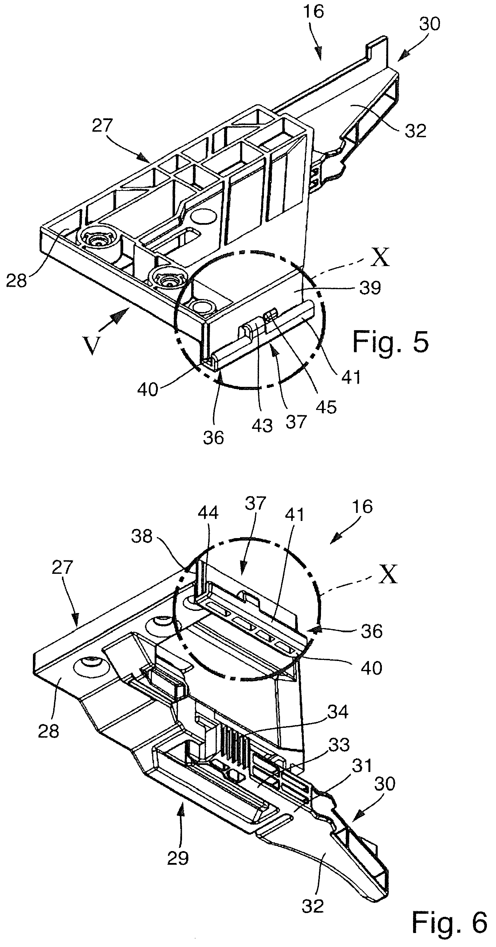

Das Adapterelement 16 besitzt als Teil der Rastmittel 36 einen Rastabschnitt 37, der, wie insbesondere in den Figuren 5 und 6 gezeigt, an einem Seitenrand 38 der Grundplatte 28 des Adaptergehäuses 27 ausgebildet ist. Der Rastabschnitt 37 verläuft im Wesentlichen senkrecht zur Stirnseite des Adaptergehäuses 27 und im Wesentlichen parallel zum Lagerabschnitt 29. Der Rastabschnitt 37 besitzt einen leistenförmig ausgebildeten, an den Seitenrand 38 der Grundplatte 28 angesetzten Basisabschnitt 39, der, wie insbesondere in Figur 6 gezeigt, sich ein Stück weit über die Fläche der Grundplatte 28 des Adaptergehäuses 27 erhebt. Der Basisabschnitt 39 ist also in Längsrichtung des Adapterelements 16 ausgerichtet. An dem Basisabschnitt 39 erstreckt sich im Wesentlichen senkrecht zu diesem ausgerichtet und einstückig mit diesem verbunden ein Boden 40, an dem sich wiederum beabstandet vom Basisabschnitt 39 eine Randleiste 41, die parallel zum Basisabschnitt 39 verläuft, erstreckt. Insgesamt bilden Basisabschnitt 39, Boden 40 und Randleiste 41 ein U-förmiges Befestigungsprofil zur Befestigung an einen Gegen-Rastabschnitt 42 am Seitenwandelement 17. An der Oberkante der Randleiste 41 erhebt sich, von der Oberkante nach oben abragend, eine hakenförmige, elastisch nachgiebige Rastnase 43. Die Rastnase 43 ragt ein Stück weit in eine von Basisabschnitt 39, Boden 40 und Randleiste 41 gebildeten Aufnahmenut 44 hinein.

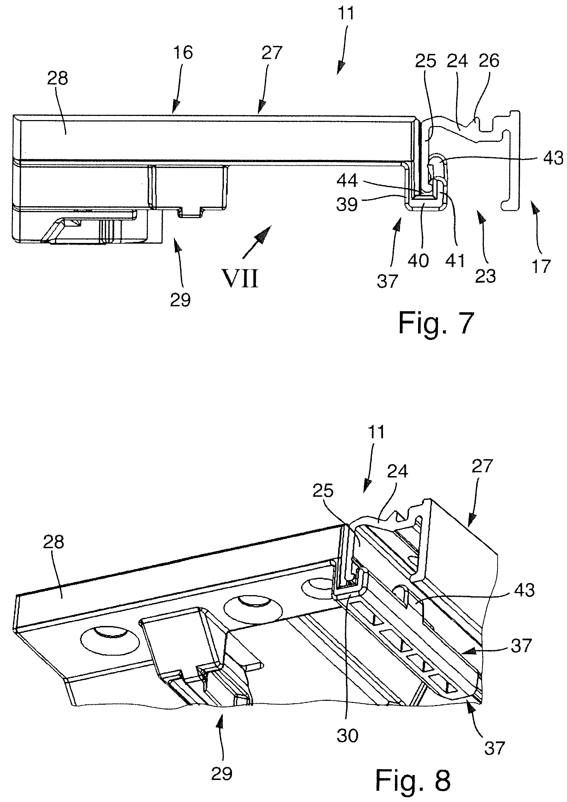

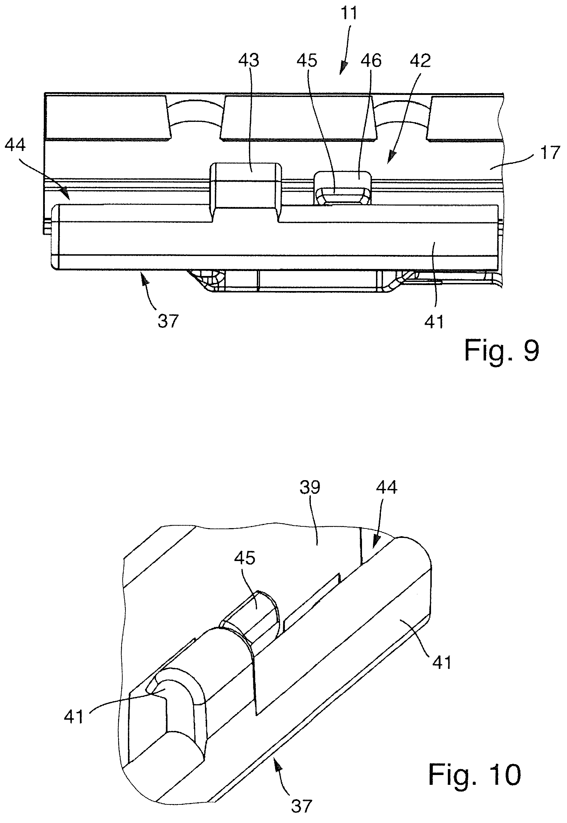

Wie insbesondere in den Figuren 8 und 9 dargestellt, wird der Rastabschnitt 37 an die Unterkante des Randstegs 25 des Montageabschnitts 23 des Seitenwandelements 17 angesetzt, wobei der Randstegs 25 des Seitenwandelements 17 in die Aufnahmenut 44 des Rastabschnitts 37 eintaucht. Da die erste Rastnase 43 quer zur Längsrichtung der Aufnahmenut 44 elastisch nachgiebig gelagert ist, lässt sich der Randsteg 25 des Seitenwandelements 17 unter Aufbiegung der ersten Rastnase 43 nach außen in die Aufnahmenut 44 einführen, wobei die erste Rastnase 43 nach dem Einführen des Randstegs 25 in eine Längsrichtung verlaufende Riefe im Randsteg 25 einschnappt und so dafür sorgt, dass das Adapterelement 16 in Höhenrichtung der Aufnahmenut 44 gesichert ist.

Wie insbesondere in den Figuren 9 und 10 zu erkennen, ist in Längsrichtung des Rastabschnitts hinter der Rastnase 43 ein Rastvorsprung 45 angeordnet. Im Gegensatz zur Rastnase 43 ist der Rastvorsprung 45 nicht an der Randleiste 41 angeordnet sondern am Basisabschnitt 39 des Rastabschnitts 37. Er ist an die Innenseite des Basisabschnitts 39 angesetzt und ragt in die Aufnahmenut 44 hinein. Der Randsteg 25 am Seitenwandelement 17 ist also zwischen den Rastvorsprung 45, der sich diesseits der Randsteg 25 befindet und der Rastnase 43, die jenseits der Randsteg 25 angeordnet ist, einzuführen.

Beim Einführen und Eintauchen der Randsteg 25 des Seitenwandelements 17 in die Aufnahmenut 44 greift der Rastvorsprung 45 in eine die Seitenwand der Randleiste 25 durchsetzende Aussparung 46 ein und sorgt damit für eine Tiefenverrastung des Adapterelements 16 am Seitenwandelement 17.

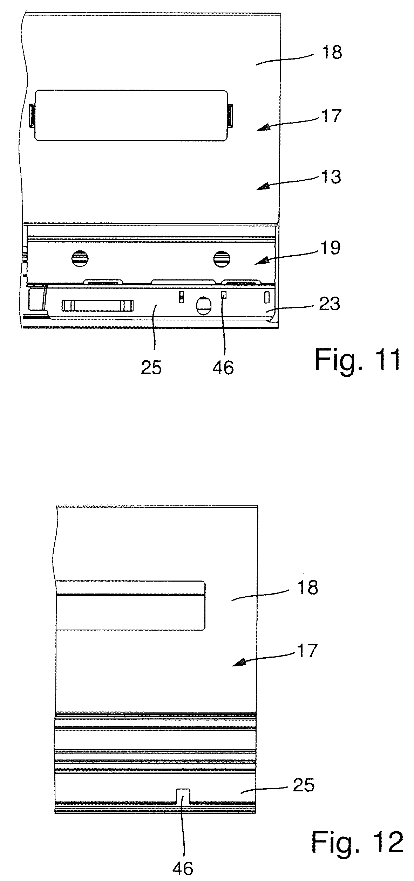

Die Figuren 11 und 12 zeigen zwei unterschiedliche Varianten des Seitenwandelements 17, wobei das Seitenelement 17 gemäß Figur 11 aus Stahl besteht und der Montageabschnitt 23 ein vom Basisabschnitt 18 separates Bauteil ist. Es ist beispielsweise möglich, dass in dem Randsteg 25 mehrere beispielsweise rechteckige Aussparungen 46 ausgebildet sind.

Die Figur 12 zeigt eine Variante des Seitenwandelements 17, wobei dieses in diesem Fall aus Aluminium besteht und der Montageabschnitt 23 einstückig an dem Basisabschnitt 18 angesetzt ist. Auch hier ist eine Aussparung 46 im Randsteg 25 des Seitenwandelements 17 zu erkennen, in die der Rastvorsprung 45 am Adapterelement 16 eintauchen kann.

## Patentansprüche

1. Vorrichtung zur lösbaren Verbindung eines in einem Möbelkorpus über eine Führungseinheit (12) beweglich geführten Möbelauszugs (13) mit der Führungseinheit (12), mit wenigstens einem mit einer Laufschiene (14) der Führungseinheit (12) lösbar verbindbaren Adapterelement (16) und mit Befestigungsmitteln zur Fixierung des Adapterelements (16) an einer Komponente des Möbelauszugs (13), **dadurch gekennzeichnet, dass** die Befestigungsmittel Rastmittel (36) zur lösbaren Befestigung des Adapterelements (16) an einer zugeordneten Komponente des Möbelauszugs (13) umfassen.

2. Vorrichtung nach Anspruch 1, **dadurch gekennzeichnet, dass** die Befestigungsmittel zur schraubenlosen Befestigung des Adapterelements (16) eingerichtet sind.

3. Vorrichtung nach Anspruch 1 oder 2, **dadurch gekennzeichnet, dass** von den Rastmitteln (36) Bestandteile am Adapterelement (16) und andere Bestandteile am Möbelauszug (13) angeordnet sind.

4. Vorrichtung nach einem der vorhergehenden Ansprüche, **dadurch gekennzeichnet, dass** die Rastmittel (36) Rastaufnahmen und in die Rastaufnahmen beim Verrasten einrastbare Rastglieder aufweisen.

5. Vorrichtung nach einem der Ansprüche 3 oder 4, **dadurch gekennzeichnet, dass** das Adapterelement (16) einen mit Bestandteilen der Rastmittel (36) ausgestatteten Rastabschnitt (37) aufweist, der bei der Befestigung derart in Kontakt mit anderen Bestandteilen der Rastmittel (36) ausgestatteten Gegen-Rastabschnitt (42) am Möbelauszug (13) bringbar ist, dass eine Rastverbindung herstellbar ist.

6. Vorrichtung nach Anspruch 5, **dadurch gekennzeichnet, dass** der Rastabschnitt (37) ein U-förmiges Befestigungsprofil zum Umklammern des Gegen-Rastabschnitts (42) aufweist.

7. Vorrichtung nach Anspruch 6, **dadurch gekennzeichnet, dass** das Befestigungsprofil eine Aufnahmenut (44) zur Aufnahme des Gegen-Rastabschnitts (42) aufweist.

8. Vorrichtung nach Anspruch 5 oder 6, **dadurch gekennzeichnet, dass** das Befestigungsprofil wenigstens ein Rastglied in Form einer elastisch nachgiebigen mit dem Gegen-Rastabschnitt (42) verrastbaren Rastnase (43) aufweist.

9. Vorrichtung nach Anspruch 8, **dadurch gekennzeichnet, dass** das Befestigungsprofil einen Rastvorsprung (45) aufweist, dem eine Rastaufnahme, insbesondere Aussparung (46), am Gegen-Rastabschnitt (42) derart zugeordnet ist, dass eine Tiefenverrastung des Adapterelements (16) an der Seitenwand herstellbar ist.

10. Vorrichtung nach einem der vorherigen Ansprüche, **dadurch gekennzeichnet** durch wenigstens einen Möbelauszug (13), insbesondere Schublade.

11. Vorrichtung nach Anspruch 6, **dadurch gekennzeichnet, dass** der Möbelauszug (13) Seitenwände und einen Boden (15) aufweist, wobei der Gegen-Rastabschnitt (42) an wenigstens einer Seitenwand, insbesondere Seitenwandelement (17) und/oder am Boden (15) angeordnet ist.

12. Vorrichtung nach Anspruch 11, **dadurch gekennzeichnet, dass** der Gegen-Rastabschnitt (42) eine Rastaufnahme in Form einer in der Seitenwand ausgebildeten Aussparung (46) aufweist.

13. Vorrichtung nach Anspruch 11 oder 12, **dadurch gekennzeichnet, dass** die Seitenwände als Seitenzargen ausgebildet sind.

14. Möbel, mit einem relativ zu einem Möbelkorpus bewegbaren, über eine Führungseinheit (12) geführten Möbelauszug (13), **gekennzeichnet durch** eine Vorrichtung (11) nach einem der Ansprüche 1 bis 13.
